# EUROPEAN PATENT SPECIFICATION

(11) **EP 3 874 940 B1**
(45) Date of publication and mention of the grant of the patent: **01.05.2024**
(21) Application number: 21159982.4
(22) Date of filing: 01.03.2021
(51) Int. Cl.: B26D 1/06, A01J 27/04, A01J 25/00, B26D 3/18, B26D 7/18, B26D 7/08

(54) **A CUTTING SYSTEM AND METHOD FOR CUTTING CHEESE PRODUCT**
SCHNEIDSYSTEM UND VERFAHREN ZUM SCHNEIDEN VON KÄSEPRODUKTEN
SYSTÈME DE DÉCOUPE ET PROCÉDÉ DE DÉCOUPE DE PRODUIT FROMAGER

(30) Priority: 02.03.2020 DK PA202070134
(43) Date of publication of application: 08.09.2021
(73) Proprietor: JH Consulting V/Jørgen Henriksen, 4330 Hvalsø (DK)
(72) Inventor: Henriksen, Jørgen, 4330 Hvalsø (DK)
(74) Representative: Plougmann Vingtoft a/s

(56) References cited:
- WO-A1-2019/139918
- DE-A1- 2 354 778

## Description

### FIELD OF THE INVENTION

The invention relates to a cutting system used when producing cast white cheese such as Feta in retail cups or canisters.

### BACKGROUND OF THE INVENTION

There is a growing market for cast white cheese whether made from retentate from ultra filtration plants, micro filtration plants or from recombined mix.

Many customer want the cheese blocks in the containers to be sliced or even cut into cubes.

In the modern plants producing cast cheese the whole manufacturing process from sterilizing of the containers to be filled to closing of the containers with the coagulated product takes place in closed rooms with an atmosphere of sterile air above the product.

Existing plants for slicing of the cast cheese in the containers are supplied with two sets of cutting tools. The reason for this is that during the operation of the cutting tool a thin layer will accumulate on the tool, this will require a change of the cutting tool to a clean one as otherwise the cutting will not be perfect and the surface of the cheese will not remain undamaged.

The change of the cutting tool will, depending upon the composition of the cheese, take place each 30 to 60 minutes. At a change of the tool a door is opened to the room with the sterile atmosphere and the ambient air can enter the room contaminating the air in the room.

WO 2019139918 A1 discloses systems and methods for cutting a food item when preparing it to be served to a customer. The cutting system may include metal wipers to clean one or more cutting blades. The cutting system may include a cover that may be used to at least partially surround a portion of the cutting system. The cover may include one or more doors, drawers, or other movable components that may be used to engage the cutting assembly of the cutting system by activating one or more sensors located along or proximate to the path traveled by the movable component. The movable component may activate the sensor when the movable component has appropriately positioned the food item under the cutting assembly to be cut. The cover may include a user-engageable switch to selectively engage the cutting assembly when the movable component of the cover is appropriately positioned to be cut.

### OBJECT OF THE INVENTION

It is the object of this invention to provide a cutting system which prevents accumulation of a layer of curd on the cutting tools and secures an undamaged surface of the cut cheese.

### SUMMARY OF THE INVENTION

Thus, the above described object and several other objects are intended to be obtained in a first aspect of the invention by providing a cutting system according to claim 1 for cutting cheese product in an open container in a vertical plane to produce section in the cheese, the cutting system comprising
- a blade carrying unit;
- a number of blades attached to and extending downwardly from said blade carrying unit;
- a vertically moveable first rod attached to and extending upwardly from said blade carrying unit to move the blade carrying unit with blades vertically upon a vertical movement of the first rod;
- a cleaning unit arranged below the blade carrying unit and comprising
   ∘ a number of horizontally extending through going apertures (4), said apertures (4) each being positioned to receive one of said blades and being dimensioned to provide a snug-fit with said blades;
   o a second rod/s attached to and extending upwardly from the cleaning unit longitudinally slideable through the blade carrying unit
   to positioning the cleaning unit in different positions relatively to the blade carrying unit; wherein
- the blades each are provided with a downward dimension being larger than a vertical extension of the horizontally extending through going apertures (4), so that the blades extend below the cleaning unit when the blade carrying unit is moved towards the cleaning unit.

A second aspect of the invention provides according to claim 15 a method of cutting cheese by use of a cutting system according to claim 1.

### BRIEF DESCRIPTION OF THE FIGURES

The present invention and in particular preferred embodiments thereof will now be described in more detail with regard to the accompanying figures. The figures show ways of implementing the present invention and not to be construed as being limiting to other possible embodiments falling within the scope of the attached claim set.
Figures 1 and 2 illustrates a first preferred embodiment for producing cast white cheese in cups according to the present invention; fig. 1 is a first side view and fig. 2 is a second side view angle 90 degrees relatively to the view shown in fig. 1; in fig. 1 left hand side shows the cutting system in a cutting position whereas fig. 1 right hand side shows the cutting system in a non-cutting position with the blades extracted upwardly. Fig. 2 further illustrates the cleaning element in a cross sectional view;
Figure 3 illustrates a second preferred embodiment for producing cast white cheese in canisters according to the present invention; the illustration is made as a side view as in fig. 1;
Figure 4 illustrates in a horizontal cross sectional view, a further embodiment according to the present invention, in which the cleaning unit is provided with a flushing device.

### DETAILED DESCRIPTION OF AN EMBODIMENT

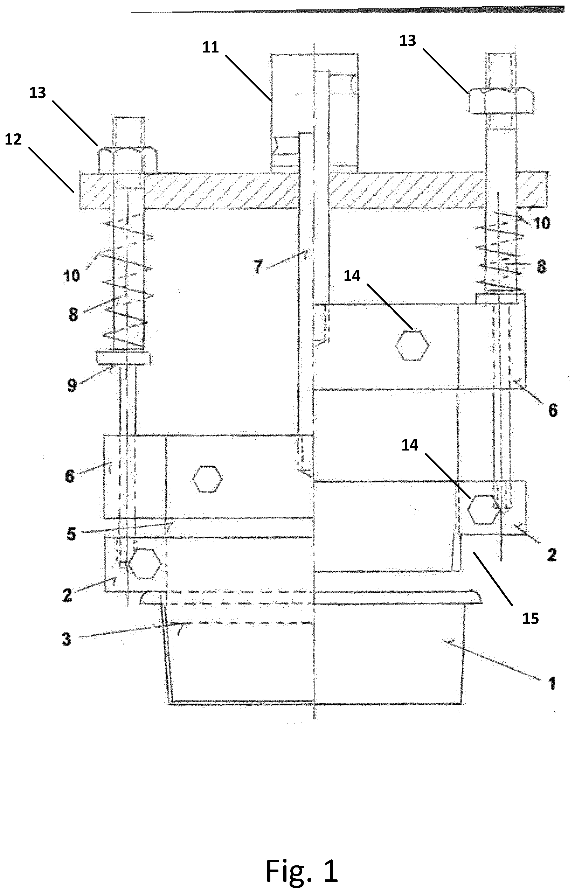

Figs. 1 to 2 show an embodiment of a system wherein 1 is a retail container, 2 is a cleaning unit lowered into the retail container 1 before cutting takes place, the bottom part 3 of the cleaning unit 2 will rest upon the surface of the cheese cast in the container 1. The cleaning unit 2 has apertures 4 in the form of narrow cavities 4 in the form of through going apertures, just allowing the blades 5 of the blade carrying unit 6 to be moved but leaving no space around the blades for any deposit to remain on the blades during retraction of the blades into cleaning unit 2.

The blade carrying unit 6 is moved up and down by the rod 7 activated by a pneumatic cylinder or an electro mechanical device.

Two rods 8 fixed to cleaning unit 2 secures an accurate positioning of the cutting unit in relation to the container. Rod/s 8 has an element 9 in the form of an increase of diameter which will make the blade carrying unit 6 lift cleaning unit 2 out of the retail container at the end of the upward movement of rod 7.

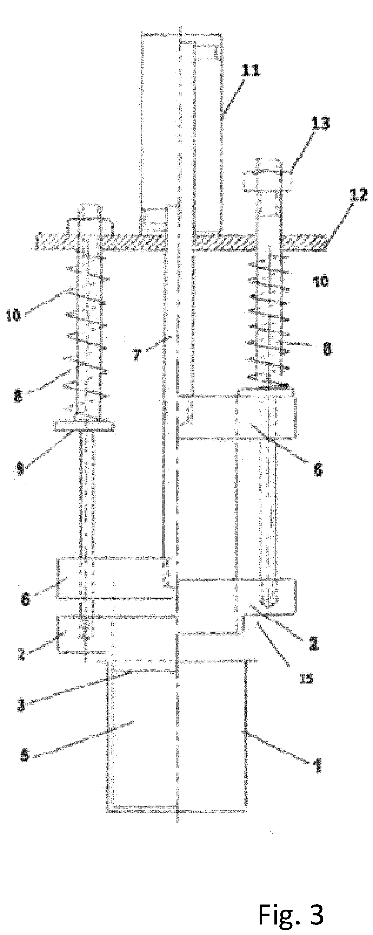

Fig.3 shows another embodiment for cutting in canisters where 1 is the canister 2 is a cleaning unit lowered into the canister before cutting takes place, the bottom part 3 will rest upon the cheese cast in the canister. The cleaning unit has a aperture 4 in the form of a narrow cavity around blade 5 just allowing blade 5 of the blade carrying unit 6 to be moved leaving no space around the blade for any deposit to remain on the on the blade during retraction of the blade into the cleaning unit 2.

The blade carrying unit is moved up and down by the rod 7 activated by a moving unit 11 such as a pneumatic cylinder, an electro mechanical device or a robot.

Two rods 8 fixed to the cleaning unit 2 secures an accurate positioning of the cutting tool in relation to the canister. The rods 8 have elements 9 which will make the blade carrying unit lift cleaning unit 2 out of the canister at the end of the upward movement of the rod 7.

Thus, the invention relates to a cutting system for cutting cheese product in an open container 1. The cutting takes place in a vertical plane to produce sections in the cheese. The cheese may be acidified white cheese cast in the container, but the invention is not limited thereto.

As disclosed in the figures, the cutting system comprising a blade carrying unit 6, which may be made from metal, plastic or other material. A number of blades 5 are attached to and extending downwardly from the blade carrying unit 6. The blades are preferably arranged parallel to each other, but may be arranged in any patterns desired to provide desired shaped of the sections provided by cutting.

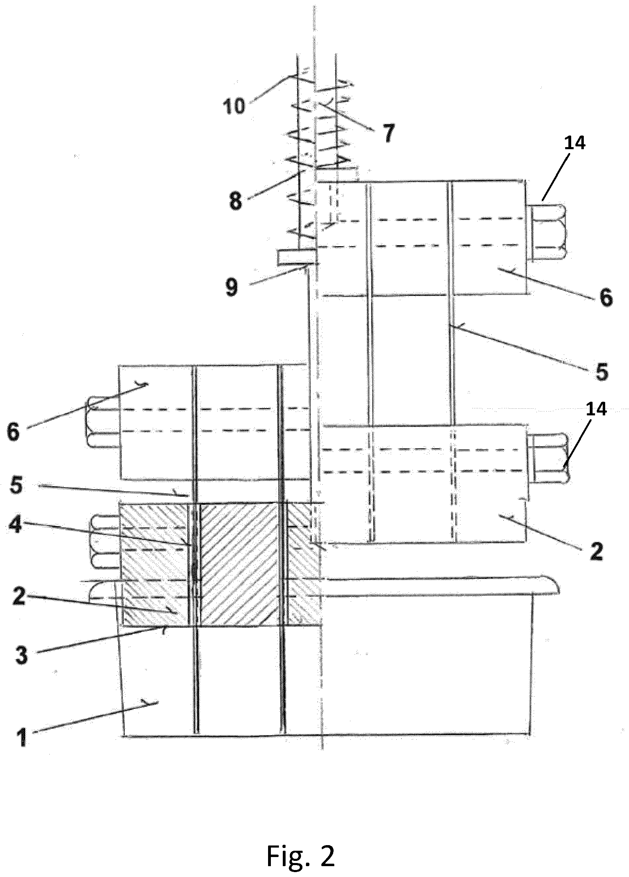

The vertically moveable first rod 7 is attached to and extending upwardly from said blade carrying unit 6. As illustrated, a vertical movement of the rod 7 will produce a vertical movement of the blade carrying unit 6 with blades 5. The cleaning unit 2 is arranged below the blade carrying unit 6 and the first rod 7 is not connected to the cleaning unit 2. The cleaning unit has a number of horizontally extending through going apertures 4 (see fig. 2), each being positioned to receive one of the blades 5. By "positioning" is typically meant that the pattern in which the blades 5 are arranged is mimicked by the pattern of the apertures 4, and that the positioning of the blade carrying unit 6 and the cleaning unit 2 relatively to each other in the cutting system is so that when the blade carrying unit 6 moves downwardly the blades travel in the apertures 4. The apertures 4 are dimensioned to provide a snug-fit with the blades 5.

The second rod/s 8 is attached to and extends upwardly from the cleaning unit 2 longitudinally slideable through the blade carrying unit 6. Thereby, the cleaning unit 2 can be positioned in different positions relatively to the blade carrying unit 6.

The blades 5 are each provided with a downward dimension being larger than a vertical extension of the horizontally extending through going apertures 4, so that the blades 5 extend below the cleaning unit 2 when the blade carrying unit 6 is moved towards the cleaning unit 2.

The illustrated cutting system further comprising an upper member 12 arranged above the blade carrying unit 6. The upper member 12 is typically a part of a larger structure carrying the cutting system. The first rod 7 and the second rod/s 8 both extend longitudinally slideable through and above the upper member 12.

At the last part of the upward movement of rod 7 the upper surface of the blade carrying unit 6 will abut the element/s 9 on the rod/s 8, as the rod/s 8 can slide upward through the upper member 12 the cleaning unit 2 will be lifted out of the container.

A spring 10 is arranged inbetween the element/s 9 and the upper member 12 to bias the second rods 8 downwardly. In the shown embodiments, the springs are arranged coiling around the rod/s 8 above the element/s 9. Thus, when the rod 7 moves upwardly, the springs 10 are compressed and when the rod 7 moves downwardly, the spring force will push the cleaning unit 2 downwardly.

An adjusting element 13 is arranged to restrict vertical movement of the second rod 8 to a lower most position set by the adjusting element 13. As indicated in the figures, the adjusting element abuts the upper surface of the upper member 12 when the cleaning element 2 is arranged at the container 1. In embodiments illustrated, the adjusting element 13 is a nut screwed onto the end of the rods 8 above the upper member 12, whereby the downward movement of the cleaning element is restricted when the nut 13 abuts the upper member 12. Thus, by changing the longitudinal position of the nut on the rod/s 8, the end position of the cleaning unit 2 can be changed.

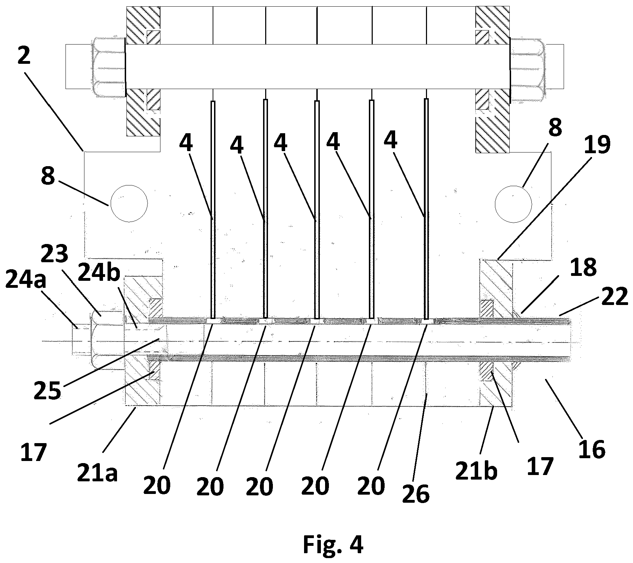

Fig. 4 illustrates in a horizontal cross sectional view, a further embodiment according to the present invention, in which the cleaning unit 2 is provided with a flushing device 16. The flushing device 16 comprising a tubular element 22 extending inside the cleaning unit 2. The tubular element 22 comprising a number of through going openings 20 the number of which, preferably, matches the number of apertures 4. The openings 20 are arranged in the wall member of the tubular element 22, so that each opening is aligned with an aperture 4 to allow fluid communication from the interior of the tubular element 22 and into the apertures 4. The openings 20 are preferably positioned on the same side as the apertures 4, to abut the narrow passages 4, and further configured to guide the fluid from the tubular element 22, through the openings 20, and into the apertures 4.

In the illustrated embodiment, the tubular element 22 extends beyond the exterior of the cleaning unit 2. At one end, the tubular element is fastened to a flange 21b by a weld 18. However, the tubular element does not necessarily have to be fastened to a flange. In the shown embodiment, the flange 21b has a surface abutting a surface of the cleaning unit 2, which in common provides an alignment interface 19. In the illustrated embodiment the alignment interface 19 is provided by the flange 19 and the cleaning unit 2 both having a flat surface and these two flat surfaces abut each other. Thereby the alignment interface 19 provides rotational guidance to assure that the opening(s) 20 is/are aligned with the apertures 4.

At the opposite end of the tubular element 22, another flange 21a is provided. Both flanges 21a, 21b holds a seal 17, e.g. a rubber seal to provide a sealing of the tubular element 22in the cleaning unit 2. To assemble the flushing device 16, a combination of a nut 23 and a thread 24a provided on the protruding part of the tubular element 22 is used to bolt the flushing device 16 to the cleaning unit 2. In embodiments where the cleaning unit 2 is assembled by parts, e.g. separable along a number of assembly surfaces 26 and the apertures 4, the flushing device 16 may also be used to hold or participate in holding the cleaning unit 2 assembled.

The tubular element 22 is open ended at the end opposite to the nut and this open end is configured to receive e.g. a tube to feed a cleaning fluid into the interior of the tubular element 22 and thereby into the apertures 4. The cleaning fluid is preferably feed as pressurised fluid to provide a more efficient flushing of the apertures 4.

The tubular element 22 is closed at the end opposite to the open end by use of a threaded element 25 in the end with the nut 23, and configured to resist cleaning fluid e.g. pressurised fluid, fed in the opposite end of the tubular element 22. The threaded element 25 co-operates with a thread provided internally in the tubular element 22 the screwed-in connection is sealed against the tubular element 22 e.g. using plumbing flax along the thread 24b.

As illustrated in fig. 4, the end opposite to the one holding the tubular element is assembled by use of a bolt and two nuts and flanges similar to or identical to those used in connection with the tubular element 22. It is noted that instead of using a bolt for this assembly, the bolt may be replaced by a flushing device as disclosed herein.

Although the present invention has been described in connection with the specified embodiments, it should not be construed as being in any way limited to the presented examples. The scope of the present invention is set out by the accompanying claim set.

### List of reference numbers used:

- 1: Retail container or canister
- 2: Cleaning unit
- 3: Bottom part 3 of the cleaning unit 2
- 4: Aperture, such as narrow cavity/cavities
- 5: Blades
- 6: Blade carrying unit
- 7: First rod
- 8: Second rod
- 9: Element
- 10: Spring
- 11: Moving unit
- 12: Upper member
- 13: Adjusting element
- 14: Fixating member, such as bolt
- 15: Recess
- 16: Flushing device
- 17: Seal, e.g. rubber seal
- 18: Backstop, e.g. a weld
- 19: Alignment interface
- 20: Through going opening
- 21a, 21b: Flange
- 22: Tubular element
- 23: Nut
- 24a, 24b: Thread
- 25: Threaded element
- 26: Assembly surface

## Claims

1. A cutting system for cutting cheese product in an open container in a vertical plane to produce section in the cheese, the cutting system comprising
• a blade carrying unit (6);
• a number of blades (5) attached to and extending downwardly from said blade carrying unit (6);
• a vertically moveable first rod (7) attached to and extending upwardly from said blade carrying unit (6) to move the blade carrying unit (6) with blades vertically upon a vertical movement of the first rod (7);
• a cleaning unit (2) arranged below the blade carrying unit (6) and comprising
∘ a number of horizontally extending through going apertures (4), said apertures (4) each being positioned to receive one of said blades and being dimensioned to provide a snug-fit with said blades (5);
o a second rod/s (8) attached to and extending upwardly from the cleaning unit (2) longitudinally slideable through the blade carrying unit (6) to positioning the cleaning unit (2) in different positions relatively to the blade carrying unit (6);
wherein
• the blades (5) each are provided with a downward dimension being larger than the vertical extension of the horizontally extending through going apertures (4), so that the blades (5) extend below the cleaning unit (2) when the blade carrying unit (6) is moved towards the cleaning unit (2).

2. A cutting system according to claim 1, further comprising an upper member (12) arranged above the blade carrying unit (6), the first rod (7) and the second rod/s (8) both extend longitudinally slideable through and above the upper member (12).

3. A cutting system according to claim 1 or 2, wherein the second rod(s) (8) comprises an element (9) activating the upward movement of the cleaning unit (2) by the blade carrying unit (6) abutting said element/s (9) at the upward movement of rod (7).

4. A cutting system according to claim 3, further comprising a spring (10) arranged inbetween the stop element (9) and the upper member (12) to bias the second rod(s) (8) downwardly.

5. A cutting system according to any of the claims 2-4, further comprising an adjusting element (13) arranged to restrict vertical movement of the second rod (8) to a lower most position set by the adjusting element (13).

6. A cutting system according to any of the preceding claims, further comprising a moving unit (11), such as a pneumatic cylinder, an electro mechanical device or a robot, configured for moving the first rod (7) vertically up and down.

7. A cutting system according to any of the preceding claims, wherein said blades (5) extends from a lower surface of the blade carrying unit (6).

8. A cutting system according to any of the preceding claims, wherein each of the blades (5) is a plate-shaped blade with a uniform thickness.

9. A cutting system according to any of the preceding claims, wherein the cleaning unit (2) comprising a recess (15) at a lower end of the cleaning unit (2), said recess (15) being configured for fitting into an opening of an open-ended container.

10. A cutting system according to any of the preceding claims, wherein the cleaning unit (2) comprises a flushing device (16), said flushing device (16) comprising a tubular element (22) extending inside the cleaning unit (2), said tubular element (22) comprises a number of through going openings (20), wherein said number of through going opening (20) preferably matches the number of apertures (4).

11. A cutting system according to any of preceding claims, wherein the first rod (7) extend from an upper surface the blade carrying unit (6) and the second rod (8) extend from an upper surface of the cleaning unit (2).

12. A cutting system according to any of the preceding claims, wherein the first rod (7) is attached to a center position of the blade carrying element (6) and wherein the second rod (8) is attached at a rim position of the cleaning unit (2).

13. A cutting system according to any of the preceding claims, comprising two second rods (8) each arranged at a rim position of the cleaning unit (2).

14. A cutting system according to any of the preceding claims, wherein the blade carrying unit (6) comprise through-going opening(s) through which the second rod(s) (8) extend to provide said slideable extending through the blade carrying unit (6).

15. A method of cutting cheese by use of a cutting system according to any of the preceding claims, the method comprising
• configuring the cutting system in a non-cutting configuration by raising the first rod (7) to an upper position;
• arranging a container (1) below the cleaning unit (2) and the blade carrying unit (6);
• moving rod (7) downwardly to arrange the cleaning unit (2) at or in and upper opening of the container (1) and moves the blades (5) through the through going apertures (4) and into the interior of the container (1), and
• retraction of the blades from the interior of the container (1) and into the cleaning unit (2) to remove deposits from the blades.

## Patentansprüche

1. Schneidsystem zum Schneiden von Käseprodukten in einem offenen Behälter in einer vertikalen Ebene, um einen Schnitt in dem Käse zu erzeugen, wobei das Schneidsystem Folgendes umfasst
• eine Klingentrageinheit (6);
• eine Anzahl von Klingen (5), die an der Klingentrageeinheit (6) befestigt ist und sich von dieser nach unten erstreckt;
• eine vertikal bewegliche erste Stange (7), die an der Klingentrageeinheit (6) befestigt ist und sich von dieser nach oben erstreckt, um die Klingentrageeinheit (6) mit den Klingen bei einer vertikalen Bewegung der ersten Stange (7) vertikal zu bewegen;
• eine Reinigungseinheit (2), die unterhalb der Klingentrageeinheit (6) angeordnet ist und Folgendes umfasst:
o eine Anzahl von sich horizontal erstreckenden, durchgehenden Öffnungen (4), wobei die Öffnungen (4) jeweils positioniert sind, um eine der Klingen aufzunehmen und so dimensioniert sind, dass sie eng an den Klingen (5) anliegen;
o eine zweite Stange bzw. zweite Stangen (8), die an der Reinigungseinheit (2) befestigt ist bzw. sind und sich von dieser nach oben erstreckt bzw. erstrecken, und die in Längsrichtung durch die Klingentrageeinheit (6) verschiebbar ist/sind, um die Reinigungseinheit (2) in verschiedenen Positionen relativ zu der Klingentrageeinheit (6) zu positionieren;
wobei
• die Klingen (5) jeweils mit einer nach unten gerichteten Abmessung versehen sind, die größer ist als die vertikale Erstreckung der sich horizontal erstreckenden durchgehenden Öffnungen (4), so dass sich die Klingen (5) unter die Reinigungseinheit (2) erstrecken, wenn die Klingentrageeinheit (6) auf die Reinigungseinheit (2) zu bewegt wird.

2. Schneidsystem nach Anspruch 1, weiter umfassend ein oberes Element (12), das über der Klingentrageeinheit (6) angeordnet ist, wobei die erste Stange (7) und die zweite(n) Stange(n) (8) sich beide in Längsrichtung verschiebbar durch und über das obere Element (12) erstrecken.

3. Schneidsystem nach Anspruch 1 oder 2, wobei die zweite(n) Stange(n) (8) ein Element (9) umfasst/umfassen, das die Aufwärtsbewegung der Reinigungseinheit (2) aktiviert, indem die Klingentrageeinheit (6) bei der Aufwärtsbewegung der Stange (7) an dem/den Element(en) (9) anliegt.

4. Schneidsystem nach Anspruch 3, weiter umfassend eine Feder (10), die zwischen dem Anschlagelement (9) und dem oberen Element (12) angeordnet ist, um die zweite(n) Stange(n) (8) nach unten zu drücken.

5. Schneidsystem nach einem der Ansprüche 2-4, das weiter ein Einstellelement (13) umfasst, das so angeordnet ist, dass es die vertikale Bewegung der zweiten Stange (8) auf eine durch das Einstellelement (13) festgelegte untere Höchstposition begrenzt.

6. Schneidsystem nach einem der voranstehenden Ansprüche, weiter umfassend eine Bewegungseinheit (11), wie einen Pneumatikzylinder, eine elektromechanische Vorrichtung oder einen Roboter, die so konfiguriert ist, dass sie die erste Stange (7) vertikal auf und ab bewegt.

7. Schneidsystem nach einem der voranstehenden Ansprüche, wobei sich die Klingen (5) von einer unteren Fläche der Klingentrageeinheit (6) aus erstrecken.

8. Schneidsystem nach einem der voranstehenden Ansprüche, wobei jede der Klingen (5) eine plattenförmige Klinge mit einer gleichmäßigen Dicke ist.

9. Schneidsystem nach einem der voranstehenden Ansprüche, wobei die Reinigungseinheit (2) an einem unteren Ende der Reinigungseinheit (2) eine Aussparung (15) umfasst, wobei die Aussparung (15) konfiguriert ist, um in eine Öffnung eines Behälters mit offenem Ende zu passen.

10. Schneidsystem nach einem der voranstehenden Ansprüche, wobei die Reinigungseinheit (2) eine Spülvorrichtung (16) umfasst, wobei die Spülvorrichtung (16) ein rohrförmiges Element (22) umfasst, das sich innerhalb der Reinigungseinheit (2) erstreckt, wobei das rohrförmige Element (22) eine Anzahl von durchgehenden Öffnungen (20) umfasst, wobei die Anzahl der durchgehenden Öffnungen (20) vorzugsweise der Anzahl der Öffnungen (4) entspricht.

11. Schneidsystem nach einem der voranstehenden Ansprüche, wobei sich die erste Stange (7) von einer Oberseite der Klingentrageeinheit (6) erstreckt und die zweite Stange (8) sich von einer Oberseite der Reinigungseinheit (2) aus erstreckt.

12. Schneidsystem nach einem der voranstehenden Ansprüche, wobei die erste Stange (7) an einer mittleren Position des Klingentragelements (6) befestigt ist und die zweite Stange (8) an einer Randposition der Reinigungseinheit (2) befestigt ist.

13. Schneidsystem nach einem der voranstehenden Ansprüche, umfassend zwei zweite Stangen (8), die jeweils an einer Randposition der Reinigungseinheit (2) angeordnet sind.

14. Schneidsystem nach einem der voranstehenden Ansprüche, wobei die Klingentrageeinheit (6) eine oder mehrere durchgehende Öffnung(en) umfasst, durch die sich die zweite(n) Stange(n) (8) erstreckt/erstrecken, um das gleitende Erstrecken durch die Klingentrageeinheit (6) bereitzustellen.

15. Verfahren zum Schneiden von Käse unter Verwendung eines Schneidsystems nach einem der voranstehenden Ansprüche, wobei das Verfahren Folgendes umfasst:
• Konfigurieren des Schneidsystems in einer nicht schneidenden Konfiguration durch Anheben der ersten Stange (7) in eine obere Position;
• Anordnen eines Behälters (1) unterhalb der Reinigungseinheit (2) und der Klingentrageeinheit (6);
• Bewegen der Stange (7) nach unten, um die Reinigungseinheit (2) an oder in einer oberen Öffnung des Behälters (1) anzuordnen und die Klingen (5) durch die durchgehenden Öffnungen (4) und in das Innere des Behälters (1) zu bewegen, und
• Zurückziehen der Klingen aus dem Inneren des Behälters (1) und in die Reinigungseinheit (2), um Ablagerungen von den Klingen zu entfernen.

## Revendications

1. Système de découpe destiné à la découpe dans un plan vertical de produit fromager dans un récipient ouvert pour produire un sectionnement dans le fromage, le système de découpe comprenant
• une unité porte-lames (6) ;
• un certain nombre de lames (5) fixées à et s'étendant vers le bas depuis ladite unité porte-lames (6) ;
• une première tige (7) mobile verticalement et s'étendant vers le haut depuis ladite unité porte-lames (6) pour déplacer verticalement l'unité porte-lames (6) avec les lames lors d'un mouvement vertical de la première tige (7) ;
• une unité de nettoyage (2) disposée au-dessous de l'unité porte-lames (6) et comprenant
∘ un certain nombre d'ouvertures traversantes (4) s'étendant horizontalement, lesdites ouvertures (4) étant positionnées chacune pour recevoir l'une desdites lames et étant dimensionnées pour réaliser un ajustement serré avec lesdites lames (5) ;
∘ une/des seconde(s) tige/s (8) fixée(s) à et s'étendant vers le haut depuis l'unité de nettoyage (2), pouvant coulisser longitudinalement à travers l'unité porte-lames (6) afin de positionner l'unité de nettoyage (2) en différentes positions par rapport à l'unité porte-lames (6) ;
dans lequel
• les lames (5) sont dotées chacune d'une dimension vers le bas qui est plus grande que l'extension verticale des ouvertures traversantes (4) s'étendant horizontalement, de sorte que les lames (5) s'étendent au-dessous de l'unité de nettoyage (2) lorsque l'unité porte-lames (6) est déplacée vers l'unité de nettoyage (2).

2. Système de découpe selon la revendication 1, comprenant en outre un élément supérieur (12) disposé au-dessus de l'unité porte-lames (6), la première tige (7) et la/les seconde(s) tige/s (8) s'étendent l'une et l'autre/les autres longitudinalement en pouvant coulisser à travers et au-dessus de l'élément supérieur (12).

3. Système de découpe selon la revendication 1 ou 2, dans lequel la/les seconde(s) tige(s) (8) comprend/comprennent un élément (9) activant le mouvement ascendant de l'unité de nettoyage (2) par l'unité porte-lames (6) venant buter contre le(s)dit(s) élément/s (9) lors du mouvement ascendant de la tige (7).

4. Système de découpe selon la revendication 3, comprenant en outre un ressort (10) disposé entre l'élément d'arrêt (9) et l'élément supérieur (12) pour attirer la/les seconde(s) tige(s) (8) vers le bas.

5. Système de découpe selon l'une quelconque des revendications 2-4, comprenant en outre un élément d'ajustement (13) disposé pour restreindre le mouvement vertical de la seconde tige (8) à une position la plus basse fixée par l'élément d'ajustement (13).

6. Système de découpe selon l'une quelconque des revendications précédentes, comprenant en outre une unité de déplacement (11), telle qu'un cylindre pneumatique, un dispositif électromécanique ou un robot, configuré pour déplacer verticalement la première tige (7) vers le haut et le bas.

7. Système de découpe selon l'une quelconque des revendications précédentes, dans lequel lesdites lames (5) s'étendent depuis une surface inférieure de l'unité porte-lames (6).

8. Système de découpe selon l'une quelconque des revendications précédentes, dans lequel chacune des lames (5) est une lame en forme de plaque ayant une épaisseur uniforme.

9. Système de découpe selon l'une quelconque des revendications précédentes, dans lequel l'unité de nettoyage (2) comprend un évidement (15) à une extrémité inférieure de l'unité de nettoyage (2), ledit évidement (15) étant configuré pour s'adapter dans un orifice d'un récipient à extrémité ouverte.

10. Système de découpe selon l'une quelconque des revendications précédentes, dans lequel l'unité de nettoyage (2) comprend un dispositif de rinçage (16), ledit dispositif de rinçage (16) comprenant un élément tubulaire (22) s'étendant à l'intérieur de l'unité de nettoyage (2), ledit élément tubulaire (22) comprend un certain nombre d'ouvertures traversantes (20), le dit certain nombre d'ouvertures traversantes (20) correspondant de préférence au nombre d'ouvertures (4).

11. Système de découpe selon l'une quelconque des revendications précédentes, dans lequel la première tige (7) s'étend depuis une surface supérieure de l'unité porte-lames (6) et la seconde tige (8) s'étend depuis une surface supérieure de l'unité de nettoyage (2).

12. Système de découpe selon l'une quelconque des revendications précédentes, dans lequel la première tige (7) est fixée à une position centrale de l'élément porte-lames (6) et dans lequel la seconde tige (8) est fixée à une position périphérique de l'unité de nettoyage (2).

13. Système de découpe selon l'une quelconque des revendications précédentes, comprenant deux second tiges (8) disposées chacune à une position périphérique de l'unité de nettoyage (2).

14. Système de découpe selon l'une quelconque des revendications précédentes, dans lequel l'unité porte-lames (6) comprend une/des ouverture(s) traversante(s) à travers laquelle/lesquelles s'étend(ent) la/les seconde(s) tige(s) (8) pour réaliser ladite extension pouvant coulisser à travers l'unité porte-lames (6).

15. Procédé de découpe de fromage par utilisation d'un système de découpe selon l'une quelconque des revendications précédentes, le procédé comprenant
• la configuration du système de découpe en une configuration de non-découpe par élévation de la première tige (7) jusqu'à une position supérieure ;
• la disposition d'un récipient (1) au-dessous de l'unité de nettoyage (2) et l'unité porte-lames (6) ;
• le déplacement de la tige (7) vers le bas pour disposer l'unité de nettoyage (2) au niveau de ou dans un orifice supérieur du récipient (1) et faire passer les lames (5) à travers les ouvertures traversantes (4) et à l'intérieur du récipient (1), et
• le retrait des lames de l'intérieur du récipient (1) et dans l'unité de nettoyage (2) pour retirer les dépôts des lames.
